# EUROPÄISCHE PATENTSCHRIFT

(11) **EP 2 430 375 B1**
(45) Veröffentlichungstag und Bekanntmachung des Hinweises auf die Patenterteilung: **31.07.2013**
(21) Anmeldenummer: 10726882.3
(22) Anmeldetag: 14.05.2010
(51) Int. Cl.: C25D 15/00, C25D 7/00, F24J 2/48, F24J 2/05, F24J 2/50, F24J 2/04, F24J 2/46, C03C 17/23, C03C 17/00, C03C 17/34, C25D 13/02, C25D 15/02, C25D 9/08

(54) **VAKUUMKOLLEKTORRÖHRE UND VERFAHREN ZUR HERSTELLUNG EINER SOLCHEN VAKUUMKOLLEKTORRÖHRE**
VACUUM COLLECTOR TUBE AND METHOD FOR PRODUCING SAID TYPE OF VACUUM COLLECTOR TUBE
TUBE DE CAPTEUR SOUS VIDE ET PROCÉDÉ DE FABRICATION D'UN TEL TUBE DE CAPTEUR SOUS VIDE

(30) Priorität: 14.05.2009 DE 102009021252
(43) Veröffentlichungstag der Anmeldung: 21.03.2012
(73) Patentinhaber: Helmholtz-Zentrum Berlin für Materialien und Energie GmbH, 14109 Berlin (DE)
(72) Erfinder: CHEN, Jie, 10589 Berlin (DE); AÉ, Lorenz, 17489 Greifswald (DE); LUX-STEINER, Martha, Christina, 14163 Berlin (DE); TANG, Yang, 130051 Changchun (CN)
(86) Internationale Anmeldenummer: PCT/DE2010/000538
(87) Internationale Veröffentlichungsnummer: WO 2010/130252

(56) Entgegenhaltungen:
- WO-A1-2009/051595
- WO-A2-2004/022637

## Beschreibung

Die Erfindung betrifft eine Vakuumkollektorröhre zur Einkopplung von Sonnenlicht, mindestens aufweisend zwei konzentrisch ineinander angeordnete Röhren, die einen geschlossenen Raum bilden, der evakuiert ist, sowie ein Verfahren zur Herstellung einer solchen Vakuumkollektorröhre.

Vakuumkollektorröhren sollen möglichst effizient Licht einkoppeln, in Wärme umwandeln und die erzeugte Wärme in ein Wärmeträgermedium ableiten.

Dem Stand der Technik nach sind unterschiedliche Lösungen bekannt, wie die Lichteinkopplung in den Absorber einer Vakuumkollektorröhre weiter verbessert werden kann.

Beispielsweise wird in DE 298 01 531 U1 eine doppelwandige Vakuumkollektorröhre mit den oben genannten Merkmalen beschrieben. Es wird ausgeführt, dass die äußere Wandung der inneren Röhre mit einer selektiven, lichtabsorbierenden Beschichtung versehen ist. Dabei erfolgt der Wärmeübergang von der absorbierenden Schicht auf der Außenseite der inneren Röhre auf das direkt an der Innenseite der inneren Röhre vorbeiströmende Wärmeträgermedium.

In DE 100 33 240 A1 wird eine Vakuumröhre für Solarenergieanlagen beschrieben, die einen evakuierten, transparenten Zylinder mit einer teilweisen Verspiegelung aufweist, in dem mindestens ein Absorberrohr entgegen der Verspiegelung versetzt zum Mittelpunkt des transparenten Zylinders angeordnet ist. Außerdem kann auch mindestens eine Absorberfahne an dem Absorberrohr angeordnet sein. Diese Anordnung soll einen verbesserten solaren Ertrag realisieren. Angaben zur Absorberschicht wurden nicht gemacht.

In WO 2009/051595 A1 wird eine Vakuumkollektorröhre, die ein Absorberrohr evakuierbar umschließt, beschrieben. Dabei ist das Absorberrohr mit verschiedenen selektiv absorbierenden Schichten aus texturierten Metall-Siliziden oder auf Titandioxidbasis sowie auf Siliziumdioxidbasis versehen. Des Weiteren werden die Vorteile einer texturierten Oberfläche zum selektiven Einfang von Phononen und der Einsatz von TCO-Schichten erwähnt.

Auf der Internetseite der Firma ESTEC.Energiespartechnik GmbH sowie im Informationsblatt der Firma Optimuzz 7Islas S. L. wird erwähnt, dass die hochselektive Absorberbeschichtung im Inneren des Vakuumreinraumes auf die Glasoberfläche mittels Sputtern aufgebracht wurde. Im Inneren der Röhre ist ein 360° gerollter Kupferabsorber direkt anliegend an der Wand angeordnet, wodurch ein guter Wärmeübergang des Glases auf den Absorber realisiert werden soll. Durch den rundumlaufenden Absorber und einen dahinterliegenden Spiegel aus hochglanzeloxiertem Aluminium ist der Einstrahlwinkel unabhängig, wodurch die Lichteinkopplung verbessert wird.

Die bekannten Lösungen zur Lichteinkopplung brachten zwar eine Verbesserung, jedoch sind diese nur mit technischem Aufwand zu realisieren.

In den letzten Jahren wurden Nanostrukturen verschiedener Materialien auf ihre Eigenschaften und ihre Anwendungsmöglichkeiten untersucht.

In Nano Lett., Vol. 8, No. 5, 2008, 1501-1505 wird über ZnO-Nanostrukturen, gewachsen auf einer auf einem Substrat angeordneten Keimschicht aus einer Lösung bei niedrigen Temperaturen, als effiziente Antireflexionsschichten in Solarzellen berichtet, um die Lichteinkopplung in die aktive Region des Bauelements zu verbessern.

In NREL/TP-520-31267, July 2002, Technical Report "Review of Mid- to High-Temperature Solar Selective Absorber Materials", sind selektiv Sonnenlicht transmittierende Beschichtungen auf einem Schwarzkörper ähnlichem Absorber beschrieben, die aus hochdotierten Halbleitermaterialien, beispielsweise SnO₂:F, SnO₂:Sb, In₂SO₃:Sn oder ZnO:Al, gebildet sind. Weiterhin wird beschrieben, dass die Absorptionsbeschichtung eines konventionellen Vakuumröhrenkollektors im Allgemeinen aus drei verschiedenen funktionalen Schichten besteht: einer metallischen infrarotreflektierende Schicht, einer Sonnenlicht absorbierenden Schicht und einer Antireflexschicht. Die metallische infrarotreflektierende Schicht soll die Wärmeemission vermindern. Die Antireflexschicht vermindert die Reflexionsverluste. Die Sonnenenergie, die von der Absorptionsschicht absorbiert wurde, wird in das Wasser, das sich in einer Glasröhre befindet, durch die infrarotreflektierende Metallschicht und das Glas geleitet.

In Chem. Mater. 2005, 17, 1001-1006 wird zur Herstellung von ZnO-Nanoröhren ein zweistufiger Prozess angewendet, bei dem zunächst eine gleichmäßige Keimschicht mittels ALD (Atomic Layer Deposition) auf ein beliebiges Substrat abgeschieden wird, auf der anschließend in einer wässrigen Lösung zweidimensionale ZnO-Nanostäbchen aufgewachsen werden.

Ein einstufiges Verfahren zur Herstellung von ZnO-Nanostäbchen mit hohem inneren Quantenwirkungsgrad mittels Elektrodeposition in wässriger Lösung aus Zn(NO₃)₂ und HNO₃ ist in Appl. Phys. Lett. 92, 161906 (2008) beschrieben.

Aufgabe der Erfindung ist es nun, eine weitere Vakuumkollektorröhre mit einer vom Einstrahlwinkel des Sonnenlichts unabhängigen Lichteinkopplung anzugeben, die weniger aufwändig in ihrer Herstellung ist, sowie ein Verfahren hierzu.

Die Aufgabe wird durch die Merkmale des Anspruchs 1 gelöst.

Dabei ist bei einer Vakuumkollektorröhre der eingangs genannten Art erfindungsgemäß die innere Röhre lichtabsorbierend ausgebildet und auf dieser außen eine TCO-Schicht und darauf eine Schicht aus vertikal freistehenden ZnO-Nanostäbchen angeordnet. Die innere absorbierende Röhre mit der TCO-Schicht und den freistehenden ZnO-Nanostäbchen bildet erfindungsgemäß den selektiven Absorber der Vakuumröhre. Dieser selektive Absorber weist eine hohe Absorption und eine geringe Emission auf.

Das System aus freistehenden ZnO-Nanostäbchen zur Lichteinkopplung zeigt hohe Transmission für Sonnenlicht und geringe globale Reflexion. Das Sonnenlicht wird direkt in die absorbierende Röhre eingekoppelt und die Wärme an das Wasser, das sich in der inneren Röhre befindet, übertragen. Dieses System fungiert als sonnenlichtselektives Absorberelement für einen Vakuumröhrenkollektor.

Mit der erfindungsgemäßen Anordnung wird eine Lösung angegeben, mit der die oben erwähnte Schichtenfolge metallische infrarotreflektierende Schicht, eine Sonnenlicht absorbierende Schicht und eine Antireflexschicht weniger aufwändig ersetzt werden kann.

Neben den bereits erwähnten Eigenschaft einer hohen Transmission und einer geringen Emission der freistehenden ZnO-Nanostäbchen wirkt die darunterliegende TCO-Schicht als infrarotreflektierende Schicht und vermindert damit die Emission von Wärmestrahlung.

Bei dieser Erfindung wird das Sonnenlicht direkt in die innere Röhre, die aus schwarzem, Sonnenlicht absorbierenden Glas oder aus einem dünnen schwarzen Plastikrohr oder einem Metallrohr mit aufgebrachter dünner lichtabsorbierender Schicht ausgebildet sein kann, eingekoppelt. Besonders vorteilhaft ist die Verwendung von Schwarzglas, da das erhitzte Glas die Wärme an das Wasser im Inneren der Röhre abgibt. Es ist also keine weitere Absorberschicht wie im konventionellen Vakuumröhrenkollektor erforderlich, da die innere lichtabsorbierende Röhre eine hohe Absorption aufweist und die Funktion des Lichtabsorbers übernimmt.

Ausführungsformen der Erfindung beziehen sich zunächst auf die TCO-Schicht und die ZnO-Nanostäbchen.

Es ist vorgesehen, dass die Dicke der außen auf die innere Röhre aufgebrachten TCO-Schicht 40 bis 4.000 nm beträgt.

Bezüglich der ZnO-Nanostäbchen ist vorgesehen, dass diese einen Durchmesser von 30 bis 500 nm und eine Länge von 100 bis 3.000 nm aufweisen. Ihr Abstand zueinander liegt im nm-Bereich und beträgt insbesondere einige 10 nm bis einige 100 nm. Als vorteilhaft hat sich erwiesen, die ZnO-Nanostäbchen nadelförmig auszubilden und in einem spitzen Kegelstumpf auslaufen zu lassen.

Eine andere Ausführungsform sieht vor, dass auf die äußere Röhre, die transparent ist, außen eine zusätzliche TCO-Schicht aufgebracht ist, um die Emmission von Wärmestrahlung aus der Vakuumkollektorröhre zu verringern.

Mit der Funktion eines Infrarot-Reflektors ist in einer weiteren Ausführungsform auf die äußere transparente Röhre innen eine zusätzliche TCO-Schicht aufgebracht.

Das Material für diese TCO-Schichten ist ausgewählt aus FTO, ITO oder ZnO:Metall, die Dicke der zusätzlichen TCO-Schichten beträgt 20 bis 3.000 nm.

Die erfindungsgemäße Vakuumkollektorröhre mit dem selektiven Absorber, gebildet aus der inneren Röhre, die beschichtet ist mit einer TCO-Schicht und darauf angeordnet ZnO-Nanostäbchen aufweist, kann sowohl in stabförmigen als auch in U-fömigen Kollektorsystemen eingesetzt und mit bekannten Mitteln miteinander verbunden werden.

Das erfindungsgemäße Verfahren zur Herstellung der beschriebenen Vakuumkollektorröhre ist in Anspruch 11 beschrieben.

Entsprechend wird die innere Glasröhre vor dem konzentrischen Anordnen mit der äußeren transparenten Röhre zunächst mit einer TCO-Schicht versehen und anschließend darauf eine Schicht aus vertikal freistehenden ZnO-Nanostäbchen mittels Elektrodepsosition aufgebracht wird, wobei in einem standardgemäßen Drei-Elektroden-Reaktor eine wässrige Lösung aus einem Zn-Salz und einem Dotiermittel für das nanostrukturierte ZnO verwendet wird, diese Lösung in die mit der TCO-Schicht innen versehene Röhre eingefüllt und bei Anlegen eines Potentials und Einstellen einer Depositionstemperatur von unterhalb 90 °C auf der in der wässrigen Lösung befindlichen Röhre mit der elektrisch leitenden TCO-Schicht nanostrukturiertes ZnO-Material.abgeschieden wird.

In Ausführungsformen hierzu ist vorgesehen, dass als Zn-Salz Zn(NO₃)₂ verwendet wird. Die Konzentration des Salzes beträgt 1 bis 20 mm/l.

In einer anderen Ausführungsform wird als Dotiermittel HNO₃ oder NH₄NO₃ oder NH₃ gelöst in Wasser verwendet. Dabei beträgt das molare Verhältnis von Zn(NO₃)₂ und HNO₃ in der Lösung ca. 100 : 1 und von Zn(NO₃)₂ und NH₄NO₃ von 1 : 1 bis 130: 1.

Während der Abscheidung wird ein Potential gegen die Pt-Referenzelektrode auf einen Wert zwischen -1,2 V und -1,8 V und die Depositionstemperatur zwischen 60 °C und 90 °C eingestellt, wobei die Temperatur über eine Dauer von einigen min bis 20 h aufrecht erhalten wird. Vorteilhaft hat sich erwiesen, wenn die Lösung während der Deposition gerührt wird.

Mit dem erfindungsgemäßen Verfahren können kostengünstig ZnO-Nanostäbchen hoher Kristallqualität auf elektrochemischem Wege großflächig auf die innere Glasröhre der Vakuumkollektorröhre abgeschieden werden. Das Verfahren gestattet auch in Abhängigkeit der Verfahrensparameter die Form, den Durchmesser und die Länge der ZnO-Nanostäbchen ohne Effekt auf ihre optischen Eigenschaften zu variieren.

Die Erfindung wird nun in folgenden Ausführungsbeispielen näher erläutert.

Dabei zeigen
- Fig. 1:: schematische Darstellung einer erfindungsgemäßen Anordnung;
- Fig. 2:: schematische Darstellung einer zweiten erfindungsgemäßen Anordnung;
- Fig. 3:: schematische Darstellung einer dritten erfindungsgemäßen Anordnung.

Prinzipiell besteht eine Vakuumkollektorröhre **VR** mindestens aus zwei konzentrisch ineinander angeordneten Röhren, meistens Glasröhren, die einen geschlossenen Raum bilden, der evakuiert ist.

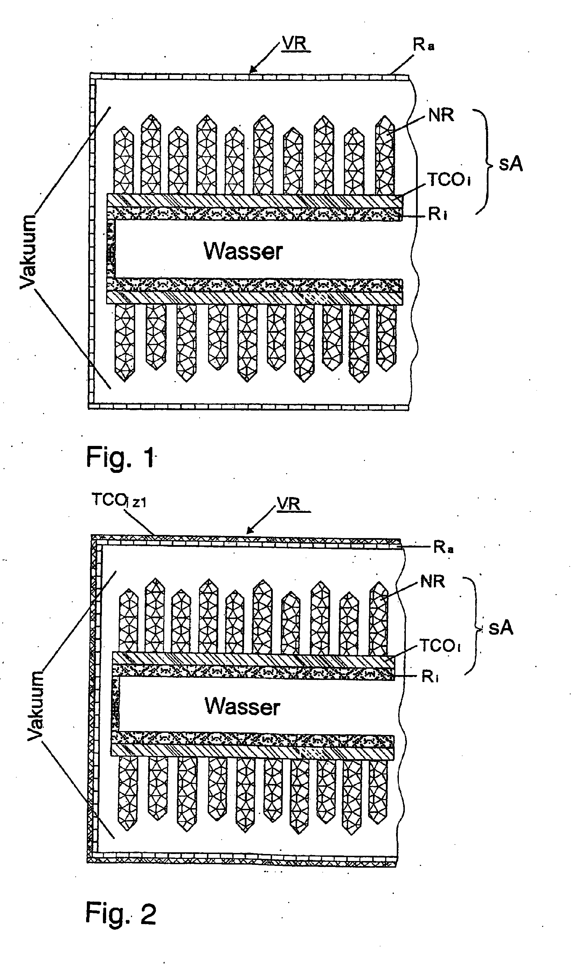

In Fig. 1 ist die innere Röhre **Rᵢ** ist aus Schwarzglas mit einer Dicke von 0,2 bis 3 mm gebildet. Auf dieser Röhre **Rᵢ** ist außen eine TCO-Schicht **TCOᵢ** einer Dicke von 40 bis 4.000 nm und eine Schicht aus vertikal freistehenden ZnO-Nanostäbchen **NR** angeordnet. Die ZnO-Nanostäbchen haben einen Durchmesser von 30 bis 500 nm und eine Länge von 100 bis 3.000 nm. Die äußere Röhre ist transparent und hier beispielsweise als Glasröhre ausgebildet und mit **Rₐ** bezeichnet. Die Röhre **Rᵢ** mit der TCO-Schicht **TCOᵢ** und den ZnO-Nanostäbchen **NR** bildet den selektiven Absorber **sA** der Vakuumröhre.

In Fig. 2 ist im Unterschied zu Fig. 1 eine zusätzliche TCO-Schicht **TCO_{z1}** auf die äußere Röhre **Rₐ** außen mit einer Dicke von 20 bis 3.000 nm aufgebracht, die die Emission der Wärmestrahlung aus dem selektiven Absorber **sA** verringern soll.

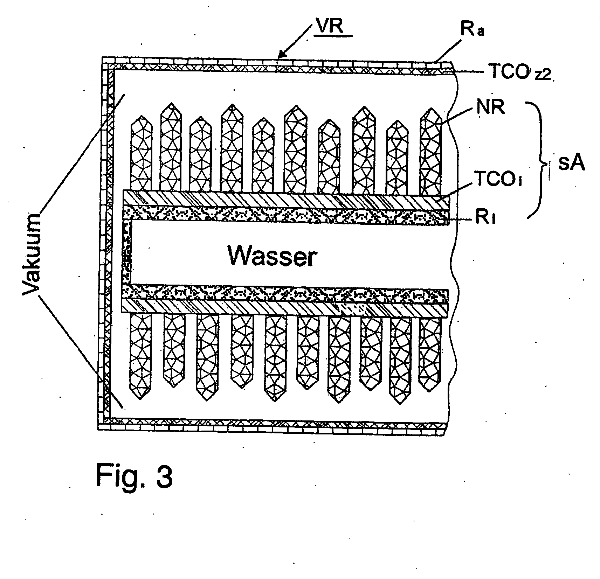

Fig. 3 zeigt schematisch eine Ausführung der Erfindung, bei der eine zusätzliche TCO-Schicht **TCO_{z2}** auf die äußere Röhre **Rₐ** innen - wiederum mit einer Dicke von 20 bis 3.000 nm aufgebracht ist. Bei dieser Ausführung fungiert die TCO-Schicht **TCO_{z2}** als Infrarot-Reflektor, der die Wärme im Inneren des Kollektors behält.

## Patentansprüche

1. Vakuumkollektorröhre zur Einkopplung von Sonnenlicht, mindestens aufweisend zwei konzentrisch ineinander angeordnete Röhren, die einen geschlossenen Raum bilden, der evakuiert ist, wobei auf der inneren Röhre außen eine TCO-Schicht angeordnet ist,
**dadurch gekennzeichnet, dass**
auf der TCO-Schicht (TCOᵢ) eine Schicht aus vertikal freistehenden ZnO-Nanostäbchen (NR) angeordnet ist und die Röhre (Rᵢ) mit der TCO-Schicht (TCOᵢ) und den ZnO-Nanostäbchen (NR) den selektiven Absorber der Vakuumkollektorröhre (VR) bildet.

2. Vakuumkollektorröhre nach Anspruch 1,
**dadurch gekennzeichnet, dass**
die innere Röhre (Rᵢ) aus Schwarzglas oder aus einem dünnen schwarzen Plastikrohr oder einem Metallrohr mit aufgebrachter dünner lichtabsorbierender Schicht gebildet ist.

3. Vakuumkollektorröhre nach Anspruch 1,
**dadurch gekennzeichnet, dass**
die TCO-Schicht (TCOᵢ) eine Dicke von 40 bis 4.000 nm aufweist.

4. Vakuumkollektorröhre nach Anspruch 1,
**dadurch gekennzeichnet, dass**
die ZnO-Nanostäbchen (NR) einen Durchmesser von 30 bis 500 nm und eine Länge von 100 bis 3.000 nm aufweisenund/oder nadelförmig und in einem spitzen Kegelstumpf auslaufend ausgebildet sind.

5. Vakuumkollektorröhre nach Anspruch 1,
**dadurch gekennzeichnet, dass**
die ZnO-Nanostäbchen (NR) zueinander einen Abstand im Nanometer-Bereich aufweisen, insbesondere von einigen 10 nm bis einige 100 nm.

6. Vakuumkollektorröhre nach Anspruch 1,
**dadurch gekennzeichnet, dass**
auf die äußere Röhre (Rₐ), die transparent ist, außen und/oder innen eine zusätzliche TCO-Schicht (TCO_{z1} bzw. TCO_{z2}), insbesondere aus einem Material, ausgewählt aus FOTO, ITO oder ZnO:Metall, aufgebracht ist, und die Dicke der zusätzlichen TCO-Schicht (TCO_{z1} bzw. TCO_{z2}) 20 bis 3.000 nm beträgt.

7. Verfahren zur Herstellung einer Vakuumkollektorröhre nach mindestens einem der Ansprüche 1 bis 6, mindestens umfassend die Verfahrensschritte konzentrisches Anordnen zweier Röhren unterschiedlicher Durchmesser, Verschließen dieser Röhren und Evakuieren des gebildeten Zwischenraumes, **dadurch gekennzeichnet, dass**
die innere lichtabsorbierende Röhre vor dem konzentrischen Anordnen mit der äußeren transparenten Röhre zunächst mit einer TCO-Schicht versehen und anschließend darauf eine Schicht aus vertikal freistehenden ZnO-Nanostäbchen mittels Elektrodeposition aufgebracht wird, wobei in einem standardgemäßen Drei-Elektroden-Reaktor eine wässrige Lösung aus einem Zn-Salz und einem Dotiermittel für das nanostrukturierte ZnO verwendet wird, diese Lösung in die mit der TCO-Schicht innen versehene Röhre eingefüllt und bei Anlegen eines Potentials und Einstellen einer Depositionstemperatur von unterhalb 90 °C auf der in der wässrigen Lösung befindlichen Röhre mit der elektrisch leitenden TCO-Schicht nanostrukturiertes ZnO-Material abgeschieden wird.

8. Verfahren nach Anspruch 7,
**dadurch gekennzeichnet, dass**
als innere lichtabsorbierende Röhre eine Röhre aus Schwarzglas oder aus einem dünnen schwarzen Plastikrohr oder einem Metallrohr mit aufgebrachter dünner lichtabsorbierender Schicht verwendet wird.

9. Verfahren nach Anspruch 7,
**dadurch gekennzeichnet, dass**
als Zn-Salz Zn(NO₃)₂ verwendet wird, vorzugsweise in einer Konzentration von 1 bis 20 mM/I.

10. Verfahren nach Anspruch 7,
**dadurch gekennzeichnet, dass**
als Dotiermittel HNO₃ oder NH₄NO₃ oder NH₃ gelöst in Wasser verwendet wird.

11. Verfahren nach mindestens einem der Ansprüche 7 bis 10,
**dadurch gekennzeichnet, dass**
eine Lösung aus Zn(NO₃)₂ und HNO₃ in einem molaren Verhältnis von ca. 100 : 1 verwendet wird.

12. Verfahren nach mindestens einem der Ansprüche 7 bis 10,
**dadurch gekennzeichnet, dass**
eine Lösung aus Zn(NO₃)₂ und NH₄NO₃ in einem molaren Verhältnis von 1 : 1 bis 130 : 1 verwendet wird.

13. Verfahren nach Anspruch 7,
**dadurch gekennzeichnet, dass**
ein Potential gegen die Pt-Referenzelektrode auf einen Wert zwischen -1,2 V und -1,8 V eingestellt wird.

14. Verfahren nach Anspruch 7,
**dadurch gekennzeichnet, dass**
die Depositionstemperatur zwischen 60 °C und 90 °C eingestellt und über eine Dauer von einigen min bis 20 h aufrecht erhalten wird.

15. Verfahren nach Anspruch 7,
**dadurch gekennzeichnet, dass**
die Lösung während der Deposition gerührt wird.

## Claims

1. A vacuum collector tube for coupling sunlight, at least comprising two tubes arranged concentrically one inside the other, which form a closed space, which is evacuated, a TCO layer being arranged outwardly on the inner tube,
**characterised in that**
a layer formed from vertically freestanding ZnO nanorods (NR) is arranged on the TCO layer (TCOᵢ) and the tube (Rᵢ) with the TCO layer (TCOᵢ) and the ZnO nanorods (NR) forms the selective absorber of the vacuum collector tube (VR).

2. The vacuum collector tube according to Claim 1,
**characterised in that**
the inner tube (Rᵢ) is formed from black glass or from a thin black plastic tube or a metal tube with applied thin light-absorbing layer.

3. The vacuum collector tube according to Claim 1,
**characterised in that**
the TCO layer (TCOᵢ) has a thickness from 40 to 4,000 nm.

4. The vacuum collector tube according to Claim 1,
**characterised in that**
the ZnO nanorods (NR) have a diameter from 30 to 500 nm and a length from 100 to 3,000 nm and/or are needle-shaped and are formed so as to terminate in a pointed truncated cone.

5. The vacuum collector tube according to Claim 1,
**characterised in that**
the ZnO nanorods (NR) have a spacing from one another in the nanometre range, in particular from a few 10 nm to a few 100 nm.

6. The vacuum collector tube according to Claim 1,
**characterised in that**
an additional TCO layer (TCO_{z1} or TCO_{z2}), in particular formed from a material selected from FTO, ITO or ZnO metal, is applied externally and/or internally to the outer tube (Rₐ), which is transparent, and the thickness of the additional TCO layer (TCO_{z1} or TCO_{z2}) is 20 to 3,000 nm.

7. A method for producing a vacuum collector tube according to at least one of Claims 1 to 6, at least comprising the method steps of concentrically arranging two tubes of different diameter, closing these tubes and evacuating the gap formed,
**characterised in that**
the inner light-absorbing tube is first provided with a TCO layer before the concentric arrangement with the outer transparent tube and a layer formed from vertically freestanding ZnO nanorods is then applied to said TCO layer by means of electrodeposition, an aqueous solution formed from a Zn salt and a doping agent being used for the nanostructured ZnO in a standard three-electrode reactor, said solution being filled into the tube provided internally with the TCO layer, and nanostructured ZnO material being deposited on the tube located in the aqueous solution and comprising the electrically conductive TCO layer when a potential is applied and a deposition temperature of less than 90 °C is set.

8. The method according to Claim 7,
**characterised in that**
a tube formed from black glass or from a thin black plastic tube or a metal tube with applied thin light-absorbing layer is used as an inner light-absorbing tube.

9. The method according to Claim 7,
**characterised in that**
Zn(NO₃)₂ is used as Zn salt, preferably in a concentration from 1 to 20 m M/I.

10. The method according to Claim 7,
**characterised in that**
HNO₃ or NH₄NO₃ or NH₃ dissolved in water is used as doping agent.

11. The method according to at least one of Claims 7 to 10,
**characterised in that**
a solution of Zn(NO₃)₂ and HNO₃ in a molar ratio of approximately 100:1 is used.

12. The method according to at least one of Claims 7 to 10,
**characterised in that**
a solution of Zn(NO₃)₂ and NH₄NO₃ in a molar ratio from 1:1 to 130:1 is used.

13. The method according to Claim 7,
**characterised in that**
a potential against the Pt reference electrode is set to a value between - 1.2 V and -1.8 V.

14. The method according to Claim 7,
**characterised in that**
the deposition temperature is set between 60 °C and 90 °C and is maintained over a period from a few min to 20 h.

15. The method according to Claim 7,
**characterised in that**
the solution is stirred during the deposition process.

## Revendications

1. Tube de collecteur de vide pour l'injection de lumière solaire, comportant au moins deux tubes disposés de manière concentrique l'un dans l'autre qui forment un espace clos qui est évacué, sur l'extérieur du tube intérieur étant disposée une couche de TCO,
**caractérisé en ce que**
sur la couche de TCO (TCOᵢ) est disposée une couche de nanobarres de ZnO (NR) isolées à la verticale et **en ce que** les tubes (Rᵢ) avec la couche de TCO (TCOᵢ) et les nanobarres de ZnO (NR) forment l'absorbeur sélectif du tube de collecteur de vide (VR).

2. Tube de collecteur de vide selon la revendication 1,
**caractérisé en ce que**
le tube intérieur (Rᵢ) est formé en verre noir ou en un mince tube en plastique noir ou en un tube métallique avec une mince couche appliquée absorbant la lumière.

3. Tube de collecteur de vide selon la revendication 1,
**caractérisé en ce que**
la couche TCO (TCOᵢ) présente une épaisseur de 40 à 4.000 nm.

4. Tube de collecteur de vide selon la revendication 1,
**caractérisé en ce que**
les nanobarres de ZnO (NR) présentent un diamètre de 30 à 500 nm et une longueur de 100 à 3.000 nm et/ou sont conçues en forme d'aiguilles et en se terminant dans un cône tronqué pointu.

5. Tube de collecteur de vide selon la revendication 1,
**caractérisé en ce que**
les nanobarres de ZnO (NR) présentent un écart mutuel de l'ordre nanométrique, notamment de quelques 10 nm à quelques 100 nm.

6. Tube de collecteur de vide selon la revendication 1,
**caractérisé en ce que**
sur le tube extérieur (Rₐ) qui est transparent est appliquée à l'extérieur ou à l'intérieur une couche TCO supplémentaire (TCO_{Z1} ou TCO_{Z2}), notamment en une matière choisie parmi le métal FTO, ITO ou ZnO et **en ce que** l'épaisseur de la couche TCO supplémentaire (TCO_{Z1} ou TCO_{Z2}) est de 20 à 3.000 nm.

7. Procédé de fabrication d'un tube de collecteur de vide selon au moins l'une quelconque des revendications 1 à 6, comprenant au moins les étapes de procédé de la disposition concentrique de deux tubes de différents diamètres, de la fermeture desdits tubes et de l'évacuation de l'espace intermédiaire formé,
**caractérisé en ce qu'**
avant la disposition concentrique avec le tube extérieur transparent, on munit d'abord le tube intérieur absorbant la lumière d'une couche TCO et on applique ensuite dessus par électrodéposition une couche de nanobarres de ZnO isolées à la verticale, dans un réacteur standard à trois électrodes, une solution aqueuse d'un sel Zn et d'un produit dopant pour le ZnO nanostructuré étant utilisée, ladite solution étant remplie dans le tube muni à l'intérieur de la couche TCO et lors de l'application d'un potentiel et du réglage d'une température de déposition inférieure à 90°C sur le tube se trouvant dans la solution aqueuse, de la matière ZnO nanostructurée étant déposée avec la couche TCO conductrice d'électricité.

8. Procédé selon la revendication 7,
**caractérisé en ce qu'**
en tant que tube intérieur absorbant la lumière, on utilise un tube en verre noir ou en un mince tube en plastique noir ou en un tube métallique avec une mince couche absorbant la lumière appliquée.

9. Procédé selon la revendication 7,
**caractérisé en ce qu'**
en tant que sel Zn, on utilise du Zn(NO₃)₂, de préférence dans une concentration de 1 à 20 mM/l.

10. Procédé selon la revendication 7,
**caractérisé en ce qu'**
en tant que produit de dopage, on utilise du HNO₃ ou du NH₄NO₃ ou du NH₃ dissous dans de l'eau.

11. Procédé selon au moins l'une quelconque des revendications 7 à 10,
**caractérisé en ce qu'**
on utilise une solution de Zn(NO₃)₂ et de HNO₃ dans un rapport molaire d'environ 100 : 1.

12. Procédé selon au moins l'une quelconque des revendications 1 à 7,
**caractérisé en ce qu'**
on utilise une solution de Zn(NO₃)₂ et de NH₄NO₃ dans un rapport molaire de 1:1 à 130:1.

13. Procédé selon la revendication 7,
**caractérisé en ce qu'**
on règle un potentiel contre l'électrode de référence Pt à une valeur comprise entre -1,2 V et -1,8 V.

14. Procédé selon la revendication 7,
**caractérisé en ce qu'**
on règle la température de déposition entre 60°C et 90°C et **en ce qu'**on la maintient sur une durée de quelques minutes à 20 h.

15. Procédé selon la revendication 7,
**caractérisé en ce qu'**
on agite la solution pendant la déposition.
